# EUROPÄISCHE PATENTSCHRIFT

(11) **EP 4 032 680 B1**
(45) Veröffentlichungstag und Bekanntmachung des Hinweises auf die Patenterteilung: **20.11.2024**
(21) Anmeldenummer: 21152685.0
(22) Anmeldetag: 21.01.2021
(51) Int. Cl.: B29C 48/11, B23P 15/24, B28B 3/26, B29C 48/345, B29C 48/32, B29C 48/30, B29L 31/60

(54) **VERFAHREN ZUR HERSTELLUNG EINES EXTRUSIONSWERKZEUGES**
METHOD FOR PRODUCING AN EXTRUSION TOOL
PROCÉDÉ DE FABRICATION D'UN OUTIL D'EXTRUSION

(43) Veröffentlichungstag der Anmeldung: 27.07.2022
(73) Patentinhaber: SAB Sondermaschinen- und Anlagen-Bau GmbH, 8530 Deutschlandsberg (AT)
(72) Erfinder: Klug, Herbert, 8524 Bad Gams (AT)
(74) Vertreter: Wirnsberger & Lerchbaum Patentanwälte OG

(56) Entgegenhaltungen:
- EP-A1- 0 402 593
- EP-A1- 1 945 583
- EP-A1- 3 168 029
- DE-A1- 102008 009 099
- US-A- 2 908 037
- US-A- 4 298 564
- US-A- 4 955 524

## Beschreibung

Die Erfindung betrifft ein Verfahren zur Herstellung eines Extrusionswerkzeuges, welches zur Bildung eines Extrudates geeignet ist, indem plastisches Material an einer ersten Seite in das Extrusionswerkzeug gepresst wird, wonach das plastische Material nach einer Umformung an einer zweiten Seite aus dem Extrusionswerkzeug austritt, wobei in die erste Seite eines Körpers Einlassöffnungen eingebracht werden, wobei in die zweite Seite des Körpers Schlitze eingebracht werden, welche die Einlassöffnungen verbinden.

Weiter betrifft die Erfindung ein Extrusionswerkzeug zum Formen von plastischem Material, umfassend einen Körper mit einer ersten Seite und einer zweiten Seite, wobei die erste Seite Einlassöffnungen und die zweite Seite Schlitze aufweist, welche mehrere Einlassöffnungen miteinander verbinden, sodass mit dem Extrusionswerkzeug Extrudat bildbar ist, indem plastisches Material über die Einlassöffnungen der ersten Seite in das Extrusionswerkzeug eingepresst wird, welches plastische Material nach einer Umformung zumindest teilweise über die Schlitze der zweiten Seite aus dem Extrusionswerkzeug austreten kann.

Aus dem Stand der Technik sind verschiedenste Verfahren zur Herstellung von Extrusionswerkzeugen sowie Extrusionswerkzeuge zum Umformen von plastischem Material bekannt, welche häufig bei der Herstellung von Katalysatorträgern, Partikelfiltern oder Wärmetauschern zur Anwendung kommen, wobei eine Extrusion von plastisch verformbaren Keramikmischungen oder Polymeren durchgeführt wird. Hierbei wird das Extrudat, welches auch als Träger, Monolith oder Wabenkörper bezeichnet wird, oftmals mit einer genormten Größe und zumeist rundem oder quadratischem Querschnitt hergestellt. Dabei kann eine Hauptaufgabe des Trägers darin gesehen werden, eine möglichst große Oberfläche zur Auftragung von Katalysatormaterialien zu bieten, um bei einem Prozess oder einer Verbrennung von Treibstoffen entstehende Abgase zu oxidieren bzw. reduzieren. Im Sinne einer besonders effizienten Ausnutzung eines vorhandenen Volumens wurden im Laufe der Zeit verschiedenste Zellquerschnitte für derartige Träger entwickelt, wobei sich bislang quadratische und sechseckige Querschnitte bewährt haben.

Das Extrusionswerkzeug weist für gewöhnlich eine Einlassseite und eine formgebende Seite auf. Demnach können Extrusionswerkzeuge zur Herstellung von Trägern mit dreieckigen, quadratischen oder rechteckigen Zellen auf einfache Weise durch Einsägen, beispielsweise durch Funkenerosion, einer Kanalgitterstruktur in die formgebende Seite hergestellt werden. Hierzu offenbart das Dokument DE 39 19 683 A1 ein Extrusionswerkzeug, bei welchem eine Geometrie des Trägers durch Schlitze in der formgebenden Seite bestimmt wird. Dementsprechend sind diese Extrusionswerkzeuge aufgrund der vergleichsweise wenigen Bearbeitungsschritte kostengünstig herstell- und skalierbar. Derartige Träger weisen allerdings ein ungünstiges Verhältnis von Oberfläche zu Volumen auf. Ein weiteres Extrusionswerkzeug ist in US 4 298 564 A offenbart.

Andererseits sind Extrusionswerkzeuge zur Herstellung von Trägern mit sechseckigem Zellquerschnitt bekannt geworden, welche ein verbessertes Verhältnis von Volumen zu Oberfläche aufweisen. Aufgrund einer komplexeren Zellgeometrie bestehen diese Extrusionswerkzeuge zumeist nicht bloß aus einem einteiligen Körper mit auf den Formgebungsprozess zugeschnittener Vorder- und Rückseite, sondern aus mehreren Einzelteilen, wobei ein Zusammenwirken der unterschiedlichen Einzelteile in Summe den Trägerquerschnitt definiert. Dabei spielt die exakte Zellgeometrie eine entscheidende Rolle, um einen gleichbleibenden Strömungswiderstand über den gesamten Trägerquerschnitt zu erzielen. Grundvoraussetzung hierfür ist eine annähernd gleiche Wandstärke der Zellen, da bereits geringe Abweichungen der Wandstärken die Zellgeometrie bei Trägerquerschnitten mit mehreren Dutzend Zellen stark negativ beeinflussen. Hierzu offenbart das Dokument WO 2016/144714 A2 ein Extrusionswerkzeug zum Herstellen eines Trägers mit Honigwabenstruktur, bei welchem eine Vielzahl von Stiften in einer Basis mit Einlassöffnungen befestigt werden. Demnach bildet die Basis die Einlassseite und die Stifte eine Auslassseite des Extrusionswerkzeuges, wobei die beiden Seiten gegenüberliegend angeordnet sind und die Form des Trägers somit ausschließlich durch die Geometrie der Stifte definiert wird. Entsprechend hat es sich durchgesetzt, den sechseckigen Zellquerschnitt durch Einpressen von Stiften als formgebende Komponenten in die Basis des Extrusionswerkzeuges zu erzielen, wobei diese exakt aufeinander abgestimmt und angepasst werden müssen, um die gleichmäßige Zellgeometrie des Trägers sicherstellen zu können. Aufgrund der versetzten Anordnung der einzelnen sechseckigen Zellen des Trägers kann ein zu dessen Herstellung benötigtes Extrusionswerkzeug nicht auf einfache Weise durch Erstellen von Schlitzen in der Auslassseite erzeugt werden. Folglich bietet der Stand der Technik zur Erzeugung von Trägern mit sechseckigen Zellquerschnitten ausschließlich die Möglichkeit des Einsetzens von Stiften in die Basis des Extrusionswerkzeuges. Da die Stifte hierbei für gewöhnlich die gesamte Auslassseite darstellen und somit den Querschnitt des Trägers, insbesondere aber dessen Zellquerschnitte, festlegen, müssen diese exakt auf die gewünschte Geometrie angepasst und präzise in die Basis des Extrusionswerkzeuges eingepresst werden. Um eine hierzu erforderliche Passgenauigkeit erzielen zu können, müssen die Stifte in hochpräziser Einzel- oder Serienfertigung erzeugt, exakt ausgerichtet in die Basis eingepresst und gegebenenfalls an diese angepasst werden. Entsprechend sind Extrusionswerkzeuge zur Herstellung von Trägern mit einem günstigen Verhältnis von Oberfläche zu Volumen nur mit großem Aufwand herstellbar.

Hier setzt die Erfindung an, sodass deren Aufgabe darin gesehen werden kann, ein Verfahren der eingangs genannten Art anzugeben, mit welchem auf einfache und effiziente Weise ein Extrusionswerkzeug hergestellt werden kann, das zur Herstellung eines Trägers mit günstigem Verhältnis von Oberfläche zu Volumen und gleichmäßiger Verteilung eines Strömungswiderstandes geeignet ist.

Weiter soll ein derartiges Extrusionswerkzeug angegeben werden.

Diese Aufgabe wird erfindungsgemäß dadurch gelöst, dass in die zweite Seite zumindest eine Vertiefung eingebracht wird, welche mit den Schlitzen und den Einlassöffnungen verbunden ist, wonach in der Vertiefung ein Element angeordnet wird, sodass ein Querschnitt des mit dem Extrusionswerkzeug gebildeten Extrudates durch eine Geometrie der Schlitze, eine Geometrie der Vertiefungen und eine Geometrie des Elementes zumindest teilweise definiert wird.

Mit einem solchen Verfahren wird der Vorteil erzielt, dass ein im Wesentlichen einteiliger Körper des Extrusionswerkzeuges auf einfache Weise hergestellt werden kann. Der Körper ist üblicherweise durch ein Metall, insbesondere einen Stahl, gebildet. Dieser Körper wird derart bearbeitet, dass in dessen erste Seite Einlassöffnungen eingebracht werden, durch welche bei der Benutzung des Extrusionswerkzeuges ein plastisch verformbares Material in den Körper eintreten kann, beispielsweise ein Material zur Herstellung eines Partikelfilters für ein Kraftfahrzeug. Um eine möglichst gleichmäßige Verteilung des plastischen Materials zu erreichen, werden eine Vielzahl von Einlassöffnungen bevorzugt äquidistant um einen zentralen Teil der ersten Seite des Körpers eingebracht. Die erste Seite und die zweite Seite sind üblicherweise parallel, wenngleich dies nicht zwingend ist.

Die Einlassöffnungen weisen üblicherweise eine Tiefe auf, welche geringer ist als ein Abstand zwischen der ersten Seite und der zweiten Seite. Anders ausgedrückt bilden die Einlassöffnungen in der Regel Sacklöcher. Dabei ist es jedoch nicht zwingend erforderlich, dass alle Einlassöffnungen eine idente Tiefe aufweisen, weshalb manche Einlassöffnungen auch tiefer in den Körper vordringen können als andere. Zudem hängt die Tiefe der Einlassöffnungen von einer angedachten Gesamtdicke des Extrusionswerkzeuges bzw. einem Abstand zwischen erster Seite und zweiter Seite ab und kann folglich an die Dicke des Körpers angepasst werden, um bei unterschiedlich dimensionierten Extrusionswerkzeugen dieselben Effekte zu erzielen.

Darüber hinaus werden in die zweite Seite des Körpers Schlitze eingebracht, um die gleichmäßige Verteilung des plastischen Materials bei einem auf der zweiten Seite des Körpers stattfindenden Formgebungsprozess sicherzustellen. Dabei werden die Schlitze üblicherweise mit zumindest solcher Breite und Tiefe eingebracht, dass diese mehrere Einlassöffnungen miteinander verbinden und plastisches Material verteilen bzw. umformen können. Im Falle von unterschiedlich tiefen Einlassöffnungen können auch die Schlitze unterschiedlich tief eingebracht werden, sodass bei einem Formgebungsprozess eine Zeitverzögerung entsteht und eine Homogenität des Extrudates beeinflusst wird.

Zudem wird zumindest eine Vertiefung in die zweite Seite des Körpers eingebracht, welche bevorzugt einen größeren Querschnitt als die Einlassöffnungen aufweist, sodass beim Formgebungsprozess plastisches Material über mehrere Einlassöffnungen in die Vertiefung eindringen kann, gegebenenfalls über einen oder mehrere Schlitze, welche die Vertiefung und die Einlassöffnungen verbinden. Hierzu wird die Vertiefung derart tief in die zweite Seite eingebracht, dass diese über die Einlassöffnungen mit der ersten Seite in Verbindung steht. Alternativ kann die Vertiefung auch nur soweit in die zweite Seite des Extrusionswerkzeuges vordringen, dass diese lediglich mit den Schlitzen direkt verbunden sind, wodurch sich über die Schlitze eine indirekte Verbindung zu den Einlassöffnungen und damit zur ersten Seite des Extrusionswerkzeuges ergibt. Folglich trägt die Vertiefung zum Formgebungsprozess bei, wobei der Querschnitt der Vertiefung auf den gewünschten Querschnitt des Extrudates abgestimmt und demnach sowohl rund als auch eckig gewählt werden kann.

Um einen günstigen Querschnitt des Extrudates zu erreichen, wird in der Folge ein Element in der Vertiefung angeordnet. Entsprechend wird durch ein Einbringen der Schlitze, der Vertiefungen und der Elemente die zweite Seite des Körpers derart ausgestaltet, dass der Querschnitt des Extrudates durch deren Geometrie bestimmt wird. Folglich wird eine besonders hohe Anzahl an Zellen im Querschnitt des Extrudates erreicht, wenn in jeder Vertiefung ein Element angeordnet ist. Somit wird ein Querschnitt des Extrudates erreicht, welcher einerseits durch die Schlitze und andererseits durch einen freien Querschnitt zwischen dem Element und der Vertiefung definiert ist, sodass verglichen mit einem herkömmlichen sechseckigen Zellquerschnitt wesentlich weniger Elemente erforderlich sind, die in Vertiefungen platziert werden müssen und verglichen mit einem herkömmlichen viereckigen Zellquerschnitt verbesserte mechanische Eigenschaften und ein verbessertes Verhältnis von Oberfläche zu Volumen erreicht wird.

Hierdurch kann beispielweise abhängig von den Geometrien der Schlitze, Vertiefungen, und Elemente ein charakteristischer Querschnitt des Extrudates entstehen, welcher sowohl einen sechseckigen Zellquerschnitt als auch einen runden Zellquerschnitt aufweisen kann. Eine Zellstruktur kann sich dabei durch die Anordnung eines runden und mehrerer vieleckiger Zellquerschnitte innerhalb einer hexagonalen Einheitszelle ergeben, wobei sich über den gesamten Querschnitt des Extrudates eine Vielzahl solcher Einheitszellen aneinanderreihen.

Gegenüber einem herkömmlichen Extrusionswerkzeug zur Herstellung von Extrudaten mit sechseckigem Zellquerschnitt ergibt sich auch der Vorteil, dass die Anzahl der benötigten Elemente zum Erzielen eines Extrudates mit ähnlichem Zellquerschnitt drastisch, insbesondere auf ungefähr ein Drittel der in herkömmlichen Extrusionswerkzeugen eingesetzten Elemente, reduziert werden kann.

Es hat sich bewährt, dass die Einlassöffnungen und die Vertiefungen durch Bohren, Fräsen und/oder Laserbohren erstellt werden. Hierdurch kann auf gleichermaßen einfache sowie präzise Weise eine Erstellung der im Extrusionswerkzeug vorhandenen Einlassöffnungen und Vertiefungen durchgeführt werden. Zudem ergibt sich der Vorteil, dass die oben beschriebenen Bearbeitungsschritte auf automatisierte Weise erfolgen und damit Fertigungstoleranzen reduziert werden können. Durch die automatisierte Erstellung der Einlassöffnungen und Vertiefungen können Durchmesser von wenigen Mikrometern bis hin zu mehreren Zentimetern präzise und reproduzierbar erstellt werden.

Darüber hinaus kann auch vorgesehen sein, dass Einlassöffnungen und Vertiefungen auf unterschiedliche Weise erstellt werden, wobei dies insbesondere vom gewünschten Durchmesser abhängig ist. Dabei können sowohl Einlassöffnungen als auch Vertiefungen in Form von Sacklochbohrungen ausgeführt werden, wobei diese mit Durchmessern im Millimeterbereich für gewöhnlich mit herkömmlichen Bohrwerkzeugen, wie beispielsweise Spiralbohrern oder Plansenkern, erstellt werden. Da aufgrund der Dicke des Körpers zumeist eine Tieflochbohrung erstellt werden muss, wobei das Bohrwerkzeug großen Belastungen ausgesetzt ist und häufig beschädigt wird, spielt hierbei insbesondere eine Stabilität des Bohrwerkzeuges eine entscheidende Rolle. Um einem rasanten Verschleiß des Bohrwerkzeuges entgegenzuwirken, wird bevorzugt ein spezieller Ablauf bei der Erstellung von Einlassöffnungen, Vertiefungen und/oder Schlitzen eingehalten. Entsprechend können Einlassöffnungen und Vertiefungen zeitsparend mittels computergesteuerten CNC-Maschinen erstellt werden, sodass die Erstellung besonders präzise und schnell erfolgen kann und zudem Durchmesser im niedrigen Millimeter- bis Mikrometerbereich erzielbar sind.

Mit Vorteil werden die Schlitze durch Sägen oder Schneiden, bevorzugt Laserschneiden oder Funkenerodieren, besonders bevorzugt Drahterodieren, erstellt. Hierdurch ergibt sich der Vorteil, dass die Schlitze wahlweise mit gleichen oder unterschiedlichen Schlitztiefen erstellt werden können. Beim Laserschneiden oder Drahterodieren ergibt sich zudem der Vorteil, dass die Schlitze auf effiziente und präzise Weise mit verschiedensten Schlitzbreiten erstellt werden können. Alternativ bietet sich die Möglichkeit, die Schlitze durch Senkerodieren oder Sägefräsen zu erstellen. Dabei ermöglichen die unterschiedlichen Methoden der Funkenerosion eine Bearbeitung des Körpers bei besonders geringem Verschleiß des Werkzeuges, sodass sich eine verbesserte Kosteneffizienz gegenüber herkömmlichen Säge- oder Schneidwerkzeugen ergibt.

Es ist zweckmäßig, dass das Element manuell und/oder maschinell in die Vertiefung eingesteckt, eingepresst und/oder eingeschraubt wird. Dadurch ergibt sich der Vorteil, dass die Elemente exakt positioniert und wieder entfernt werden können. Während das manuelle Einstecken, Einpressen oder Einschrauben den Vorteil der kurzfristigen Änderung der Positionierung sowie das einfache und effiziente Testen verschiedenster Elementformen und Größen ermöglicht, kann durch das maschinelle Einbringen der Elemente in die Vertiefungen eine zeiteffiziente Herstellung des Extrusionswerkzeuges sichergestellt werden. Beim maschinellen Einbringen der Elemente ist es vorteilhaft, wenn zumindest Teile der Elemente zum passgenauen Einsetzten in die Vertiefung und/oder die Einlassöffnung ausgebildet sind, sodass diese auf präzise Weise in den Vertiefungen positioniert werden können.

Darüber hinaus können die Einlassöffnungen zur Aufnahme von einschraubbaren Elementen bereits bei deren Erstellung mit einem Innengewinde versehen werden, sodass mit einem Außengewinde versehene Elemente einfach in diese eingeschraubt werden können. Um eine entsprechende Stabilität der Schraubverbindung zu erzielen, sollten Element und Einlassöffnung genügend Gewindegänge aufweisen, um eine Eindringtiefe des Elementes zwischen dem 0,5-fachen und 1,5-fachen dessen Durchmessers sicherzustellen.

Es kann auch vorgesehen sein, dass Mittelachsen der Vertiefungen mit Mittelachsen von zumindest einigen Einlassöffnungen zusammenfallen, wobei die Einlassöffnungen einen geringeren Durchmesser als die Vertiefungen aufweisen. Es können dann diese Einlassöffnungen zur Aufnahme von Elementen genutzt werden.

Mit Vorteil wird das Element stoffschlüssig, insbesondere durch kleben oder schweißen, in der Vertiefung befestigt. Hierdurch wird eine besonders widerstandsfähige Verbindung zwischen dem Element und dem Körper des Extrusionswerkzeuges hergestellt, wodurch selbst bei häufigem Gebrauch und dem Einsatz von besonders schwer zu verarbeitenden Materialien eine gleichbleibend hohe Qualität des Extrudates sichergestellt werden kann. Insbesondere die Verwendung von hochviskosen Materialien oder der Einsatz von hohen Fertigungsdrücken stellen zumeist hohe Ansprüche an die Verbindung zwischen Element und Körper. Um die Verbindung zwischen Element und Körper möglichst langlebig zu gestalten, hat sich sowohl Verbindungsschweißen, bevorzugt Laserschweißen, als auch Verkleben der Elemente innerhalb einer Vertiefung des Körpers als geeignete Maßnahme erwiesen. Dabei ist der Vorteil der stoffschlüssigen Verbindung insbesondere darin zu sehen, dass auch unter vorstehend genannten Umständen qualitativ hochwertige Extrudate und langlebige Extrusionswerkzeuge realisierbar sind.

Die Verfahrensschritte des Einbringens der Einlassöffnungen, des Einbringens der Schlitze und der Vertiefungen können grundsätzlich in jeder beliebigen Reihenfolge durchgeführt werden.

Es hat sich jedoch besonders bewährt, dass in einem ersten Verfahrensschritt Einlassöffnungen sowie Vertiefungen und in einem zweiten Verfahrensschritt die Schlitze erstellt werden, wobei in einem dritten Verfahrensschritt die Elemente eingesetzt werden. Diese Vorgehensweise ermöglicht eine zeiteffiziente und materialschonende Bearbeitung des Körpers. Zudem ergibt sich der Vorteil, dass der jeweils vorhergehende Verfahrensschritt zur örtlichen Positionierung des darauffolgenden Verfahrensschrittes genutzt werden kann. Hierbei eignen sich die Einlassöffnungen und Vertiefungen als Orientierungshilfen, welche die Positionierung der Schlitze im darauffolgenden Verfahrensschritt erleichtern. Demnach müssen die Schlitze lediglich so positioniert werden, dass diese vorzugsweise entlang der Mittelachsen mehrerer Vertiefungen verlaufen. Somit kann bereits mit freiem Auge erkannt werden, ob alle Vertiefungen über Schlitze miteinander verbunden sind oder ob fehlende Schlitze ergänzt werden müssen, sodass eine Qualitätskontrolle des hergestellten Extrusionswerkzeuges erleichtert wird. Sind alle Vertiefungen und Schlitze exakt positioniert, werden im dritten Verfahrensschritt die Elemente in die Vertiefungen eingesetzt. Um im Querschnitt des Extrudates die gleichbleibende Wandstärke der einzelnen Zellen sicherstellen zu können, werden die Elemente bevorzugt derart in den Vertiefungen eingesetzt, dass eine Differenz beider Durchmesser möglichst der Schlitzbreite entspricht, die Elemente werden somit in der Regel etwa mittig in den Vertiefungen positioniert.

Eine weitere Aufgabe wird erfindungsgemäß dadurch gelöst, dass bei einem Extrusionswerkzeug der eingangs genannten Art in der zweiten Seite zumindest eine Vertiefung vorgesehen ist, welche mit den Schlitzen und den Einlassöffnungen verbunden ist und in welcher ein Element angeordnet ist, sodass ein Querschnitt des Extrudates durch eine Geometrie der Schlitze, eine Geometrie der Vertiefungen und eine Geometrie des Elementes zumindest teilweise definiert ist. Üblicherweise wird ein entsprechendes Extrusionswerkzeug in einem erfindungsgemäßen Verfahren hergestellt.

Zweckmäßigerweise weisen die Einlassöffnungen und/oder die Vertiefungen einen im Wesentlichen kreisförmigen Querschnitt auf. Dadurch ergibt sich der Vorteil, dass die Einlassöffnungen und/oder Vertiefungen durch gängige Verfahren, insbesondere Bohren, auf präzise und kostengünstige Weise erstellt werden können. Dabei sind die Einlassöffnungen und/oder die Vertiefungen bevorzugt als Sacklochbohrungen ausgebildet und bei deren Erstellung darauf zu achten, dass diese eine gleichbleibende Tiefe aufweisen, um die gleichmäßige Verteilung des plastischen Materials zu begünstigen. Alternativ können die Einlassöffnungen auch mit unterschiedlicher Tiefe ausgebildet sein, sodass eine etwaige Differenz zwischen den Tiefen der Schlitze und der Einlassöffnungen ausgeglichen und diese miteinander verbunden werden.

Durch den kreisförmigen Querschnitt ergibt sich zudem der Vorteil, dass entlang der Wände der Einlassöffnungen und/oder der Vertiefungen keine Kanten vorhanden sind, wodurch günstige Strömungsbedingungen gewährleistet werden. Folglich läuft durch den runden Querschnitt der Einlassöffnungen und/oder der Vertiefungen der Formgebungsprozess besonders gleichmäßig ab, weshalb das dadurch erzeugte Extrudat besonders homogen beschaffen ist.

Es ist zweckmäßig, dass die Vertiefungen einen größeren Durchmesser als die Einlassöffnungen aufweisen. Dadurch kann eine Vertiefung von mehreren Einlassöffnungen mit plastischem Material versorgt werden, sodass ein besonders homogenes Extrudat erzeugt werden kann. Nicht zuletzt trägt der größere Durchmesser der Vertiefungen auch zur besonders vorteilhaften Geometrie des Extrusionswerkzeuges und damit zum besonders effizienten Querschnitt des Extrudates bei.

Mit Vorteil münden zumindest einige Einlassöffnungen direkt in der Vertiefung. Hierbei bietet sich nicht nur der Vorteil, dass plastisches Material direkt von einer Einlassöffnung in eine Vertiefung übertragen, sondern ein Element auch direkt über die Vertiefung in die Einlassöffnung eingesetzt werden kann. Dabei ist bevorzugt vorgesehen, die Mittelachse zumindest einer Einlassöffnung entlang der Mittelachse der Vertiefung auszurichten. Diese Einlassöffnung kann, insbesondere an einer Mündung zur Vertiefung, ein Innengewinde aufweisen, in welchem ein komplementär ausgebildetes Außengewinde des Elementes aufgenommen werden kann. Folglich kann das Element beim Anordnen in der Vertiefung direkt in die Einlassöffnung eingeschraubt werden.

Es ist von Vorteil, wenn sich zumindest einige Einlassöffnungen derart tief in das Extrusionswerkzeug erstrecken, dass diese indirekt in der Vertiefung münden. Hierdurch kann sichergestellt werden, dass die Vertiefungen der zweiten Seite des Extrusionswerkzeuges auf gleichmäßige Weise mit plastischem Material befüllbar sind. Dabei kann sich eine indirekte Mündung der Einlassöffnung in die Vertiefung ergeben, indem eine Einlassöffnung derart tief in das Extrusionswerkzeug vordringt, dass diese nur zum Teil direkt in der Vertiefung mündet. Der restliche Teil der Einlassöffnung erstreckt sich folglich entlang des Randes der Vertiefung. Hierbei wird ein Teil des plastischen Materials parallel zur Mittelachse der Vertiefung in Richtung der zweiten Seite des Extrusionswerkzeuges befördert und erst mit dem Ende der Einlassöffnung in die Vertiefung überführt.

Zweckmäßigerweise münden zumindest einige Einlassöffnungen nicht in Vertiefungen, sondern in Schlitzen. Hieraus ergibt sich eine bessere Verteilung des plastischen Materials beim Formgebungsprozess. Da das Material beim Austritt aus den Einlassöffnungen und Eintritt in die geometrische Form der zweiten Seite den Formgebungsprozess durchläuft, ist es vorteilhaft, wenn das Material gleichmäßig in die Geometrie der zweiten Seite eingebracht wird. Um variierenden Wandstärken oder gar dem gänzlichen Fehlen von Teilen des Querschnittes des Extrudates vorzubeugen, empfiehlt es sich, zumindest einige Einlassöffnungen so zu positionieren, dass diese in Schlitzen münden. Hierdurch kann das plastische Material direkt in die Schlitze eintreten und sich entlang deren Mittelachse ausbreiten, sodass die vollständige Befüllung der Geometrie der zweiten Seite und damit die Ausbildung des vorgesehenen Querschnittes des Extrudates sichergestellt werden kann. Dabei sind die Einlassöffnungen bevorzugt so positioniert, dass diese möglichst mittig in die Schlitze münden. Demnach kann ein plastisches Material beim Formgebungsprozess in die Schlitze eintreten und sich bei der Befüllung der Geometrie mit dem Material nahe den Vertiefungen vereinigen.

Mit Vorteil weisen die Einlassöffnungen eine größere Tiefe auf als die Vertiefung. Dabei wird eine Überlappung von Einlassöffnungen und Vertiefungen erzeugt, durch welche sich ein aus den Einlassöffnungen austretendes plastisches Material besonders einfach in den Vertiefungen verteilen kann.

Zweckmäßigerweise erstrecken sich die Schlitze entlang gerader Linien. Dadurch wird einerseits die Erstellung der Schlitze und andererseits die Ausbreitung des plastischen Materials erleichtert. Folglich kann zur Erstellung der Schlitze eine große Bandbreite von Geräten genutzt werden, wobei von handelsüblichen Sägen bis hin zu hochspezialisierten Funkenerodiermaschinen eine Vielzahl verschiedener Geräte zur Anwendung kommen können. Dabei bietet die Funkenerosion, insbesondere in Form einer Drahterosion, die Möglichkeit Schlitzbreiten im Millimeter- bis Mikrometerbereich präzise und reproduzierbar zu erstellen. Zudem ermöglicht diese Methode selbst die Bearbeitung von besonders harten Materialien unter verschleißarmen Bedingungen, sodass eine Vielzahl von Körpern bearbeitet werden kann, ohne das Werkzeug wechseln zu müssen. Folglich wirkt sich die Anwendung der Funkenerosion kostenschonend auf die Herstellung der Extrusionswerkzeuge aus.

Es hat sich bewährt, dass Mittelachsen der Schlitze derart angeordnet sind, dass diese Mittelachsen der Vertiefungen und Mittelachsen der Einlassöffnungen schneiden. Dadurch kann eine gleichmäßige Verteilung der Geometrien der zweiten Seite des Extrusionswerkzeuges erzielt werden. Zudem bewirkt diese Anordnung insbesondere beim Einsatz von Materialien mit besonders hoher Viskosität, welche sich nur langsam in den Geometrien der zweiten Seite des Extrusionswerkzeuges verteilen, die gleichmäßige Verteilung und Umformung des plastischen Materials. Darüber hinaus stellt diese Anordnung selbst dann die gleichmäßige Verteilung des plastischen Materials sicher, wenn dieses mit ungleichmäßigem Druck und/oder ungleichmäßig verteilt in das Extrusionswerkzeug eingebracht wird.

Zweckmäßigerweise verbinden die Schlitze sowohl Einlassöffnungen als auch Vertiefungen miteinander. Dadurch wird eine besonders gleichmäßige Verteilung des plastischen Materials in der Geometrie der zweiten Seite des Extrusionswerkzeuges sichergestellt. Darüber hinaus ermöglicht diese Anordnung dem plastischen Material einen indirekten Übertritt von Schlitzen zu Vertiefungen und *vice versa.* Dementsprechend kann die Verteilung des plastischen Materials besonders schnell und effizient erfolgen und das Extrudat besonders gleichmäßig hergestellt werden.

Mit Vorteil sind sämtliche Einlassöffnungen und sämtliche Vertiefungen entlang der Schlitze angeordnet. Dadurch ergibt sich, dass weder Einlassöffnungen noch Vertiefungen im Körper vorhanden sind, welche nicht zum Formgebungsprozess des plastischen Materials beitragen. Diese Anordnung stellt zudem auf die Verbindung zwischen Einlassöffnungen und Vertiefungen ab und erreicht diese zumindest indirekt über die Schlitze. Alternativ können einige Einlassöffnungen auch im vollen Material münden, sofern dies die Erstellung der Einlassöffnungen erleichtert und/oder hierzu notwendig ist.

Es hat sich bewährt, dass das Element kleiner als ein Querschnitt der Vertiefung ausgebildet ist, sodass zwischen Element und Vertiefung ein Abstand verbleibt, welcher Abstand bevorzugt einem 0,5-fachen bis 2-fachen einer Breite der Schlitze entspricht. Dadurch wird die gleichbleibende Wandstärke der einzelnen Zellen des Extrudates sichergestellt. Zudem bietet sich dadurch der Vorteil, dass die einzelnen Zellen des Querschnittes des Extrudates eine annähernd gleiche innere Oberfläche aufweisen. Folglich können diese mit einer annähernd gleichen Menge an Katalysatormaterial bestückt werden. Darüber hinaus wird eine Strömungsgeschwindigkeit eines Gases im Extrudat durch die von Schlitzen und Vertiefungen definierten Zellen annähernd gleichmäßig über den gesamten Querschnitt des Extrudates verteilt.

Mit Vorteil beträgt der Abstand zweier Vertiefungen zwischen 25 % und 100 %, bevorzugt 42 %, des Durchmessers der Vertiefung. Hierbei ergibt sich durch den Abstand der Vertiefungen in der zweiten Seite des Extrusionswerkzeuges ein strömungstechnisch vorteilhafter Querschnitt des Extrudates. Zudem kann ein strömungstechnisch besonders vorteilhafter Querschnitt des Extrudates erzielt werden, indem die Abstände zweier Vertiefungen nahe dem halben Durchmesser, insbesondere 42 %, der Vertiefung gewählt werden. Außerdem lässt sich dadurch ein Querschnitt des Extrudates erzielen, dessen Zellen stark an einen sechseckigen Zellquerschnitt erinnern, tatsächlich aber ein Blumenmuster darstellen. Allerdings lässt sich abhängig von den Abständen der Vertiefungen und dem Querschnitt der Elemente auch eine exakt sechseckige Geometrie der Zellen realisieren. Um die vorstehend genannten Geometrien erzeugen zu können, sind jedoch Schlitze zum Verbinden der einzelnen Vertiefungen notwendig.

Es ist zweckmäßig, wenn der Abstand zweier Einlassöffnungen zwischen 25 % und 60 %, bevorzugt 50 %, des Durchmessers der Einlassöffnung beträgt. Da bei den Einlassöffnungen auf ein Verteilen des plastischen Materials abgezielt wird, erwirkt der angegebene Abstand der Einlassöffnungen eine besonders gleichmäßige Überleitung des plastischen Materials von der ersten Seite des Extrusionswerkzeuges in die Struktur der zweiten Seite des Extrusionswerkzeuges, in welcher die Formgebung des plastischen Materials stattfindet. Der angegebene Abstand der Einlassöffnungen hat sich insofern bewährt, als damit ein besonders gleichmäßiger Formgebungsprozess erreicht wird. Im Fall von zu groß gewählten Abständen zwischen den Einlassöffnungen, kann die ungleichmäßige Verteilung des plastischen Materials im Formgebungsprozess jedoch durch die Verbindung von Schlitzen und Vertiefungen kompensiert und trotzdem ein homogenes Extrudat erzeugt werden.

Es ist von Vorteil, wenn die Schlitzbreite 5 % bis 25 %, insbesondere etwa 15 %, des Durchmessers der Vertiefung beträgt. Zudem beträgt die Schlitzbreite vorteilhafterweise 20 % bis 70 %, insbesondere 40 % bis 50 %, des Durchmessers der Einlassöffnungen. Hierdurch wird ein geregelter Übergang zwischen Materialeinlass und Materialauslass geschaffen, welcher sich maßgeblich auf die Homogenität des erstellten Extrudates auswirkt. Dadurch ergeben sich günstige Strömungsverhältnisse während des Extrudierens.

Es hat sich bewährt, dass Schlitze vorgesehen sind, welche entlang einer ersten Richtung und entlang einer zweiten Richtung an der zweiten Seite angeordnet sind, wobei die erste Richtung mit der zweiten Richtung einen ersten Winkel von 40° bis 120°, insbesondere etwa 60°, einschließt. Hierbei verlaufen Mittelachsen der Schlitze bevorzugt entlang unterschiedlicher Richtungen auf der zweiten Seite, wobei diese unter einem Winkel von 40° bis 80°, bevorzugt etwa 60°, zueinander stehen. Dabei werden durch die Schlitze nicht bloß die Vertiefungen miteinander verbunden, sondern abhängig vom Winkel der Schlitze zueinander ein Großteil der Querschnittsgeometrie des Extrudates festgelegt. Mit Vorteil sind Schlitze vorgesehen, welche entlang einer dritten Richtung an der zweiten Seite angeordnet sind, wobei die dritte Richtung mit der zweiten Richtung einen zweiten Winkel von 40° bis 120°, insbesondere etwa 60°, einschließt. Dabei schafft insbesondere eine Größe der Winkel von etwa 60° zwischen den Schlitzen der ersten Richtung und zweiten Richtung sowie der zweiten Richtung und der dritten Richtung die charakteristische Querschnittsgeometrie des Extrudates, welche starke Ähnlichkeit mit den sechseckigen Zellquerschnitten herkömmlich hergestellter Träger aufweist. Zudem können die Vertiefungen auch in sechseckiger Geometrie in die zweite Seite des Extrusionswerkzeuges eingebracht werden, wodurch sogar die Möglichkeit gegeben ist, einen exakt sechseckigen Zellquerschnitt zu realisieren.

Mit Vorteil sind entlang einer Verbindungslinie zwischen den Mittelpunkten zweier Vertiefungen immer weitere Einlassöffnungen angeordnet. Dadurch wird sichergestellt, dass auch Bereiche zwischen zwei Vertiefungen, insbesondere die Schlitze, mit plastischem Material versorgt werden und der Formgebungsprozess gleichmäßig stattfinden kann. Da die Schlitze die Vertiefungen miteinander verbinden, werden nicht bloß die Schlitze durch die zusätzlichen Einlassöffnungen mit plastischem Material versorgt, sondern indirekt auch die Vertiefungen. Folglich tragen diese Einlassöffnungen zur besonders gleichmäßigen Verteilung des plastischen Materials in den Geometrien der zweiten Seite des Extrusionswerkzeuges und zum besonders gleichmäßigen Formgebungsprozess bei.

Mit Vorteil sind die Elemente mit kreisförmigem Querschnitt ausgebildet. Dadurch können die Elemente als einfache Stifte ausgebildet sein und die Herstellungskosten der Stifte im Vergleich zum Stand der Technik stark reduziert werden. Dabei können lange, bevorzugt aus Metall gebildete, Stäbe als Rohmaterial zur Herstellung der Elemente dienen, welche lediglich im gewünschten Abstand von den Stäben abgetrennt und direkt verwendet werden. Da solche Elemente entlang deren Mittelachse rotationssymmetrisch ausgebildet sind, ergibt sich gegenüber den Stiften von herkömmlichen Extrusionswerkzeugen der Vorteil, dass diese ohne besonders sorgsame Orientierung in die Vertiefungen eingebracht werden können. Zudem kann ein Bereich der Elemente zur Befestigung in Vertiefungen ausgebildet sein, sodass das Einpressen, Einschrauben oder Einstecken der Elemente in den Vertiefungen auf besonders einfache Weise erfolgen kann. Alternativ können die Elemente auch stabartig jedoch mit eckigem, insbesondere mit sechseckigem, Querschnitt ausgebildet sein. Hierdurch ergäbe sich die Möglichkeit, den Querschnitt des Extrudates so zu gestalten, dass dieser den sechseckigen Zellquerschnitt aufweist. Vorteilhafterweise ist ein Querschnitt eines Endes der Elemente kleiner als der Querschnitt der Einlassöffnungen. Dadurch ergibt sich die Möglichkeit der Befestigung der Elemente innerhalb einer Vertiefung durch Einführen eines Endes des Elementes in die Einlassöffnung. Hierbei weicht der Querschnitt des Elementes vorzugsweise nur geringfügig von jenem der Einlassöffnungen ab, sodass die Befestigung des Elementes in der Einlassöffnung auf einfache Weise durch Einpressen erfolgen kann. Alternativ können sowohl Einlassöffnungen als auch Element mit Gewinden ausgestattet sein und die Befestigung durch Einschrauben erfolgen. Bei entsprechender Dimensionierung des Elementes wäre auch ein Verkleben oder Verschweißen des Elementes in oder an der Einlassöffnung durchführbar. Darüber hinaus kann das Element auch durch die Einlassöffnung geführt und auf der ersten Seite des Extrusionswerkzeuges befestigt werden, wobei sowohl Verkleben, Verschweißen oder Verschrauben des Elementes in Betracht gezogen werden kann.

Es ist zweckmäßig, dass ein Austrittsbereich des Extrudates an der zweiten Seite des Körpers von einem Befestigungselement begrenzt ist. Dabei kann mit dem Befestigungselement nicht bloß der Austrittsbereich des Extrudates begrenzt, sondern gleichzeitig auch das Extrusionswerkzeug an einer Extrusionsapparatur befestigt werden. Bevorzugt weist ein solches Befestigungselement zur Befestigung und Ausrichtung an der Extrusionsapparatur und des Körpers mehrere Durchführungen auf. Zudem ist es vorteilhaft, wenn auch der Körper des Extrusionswerkzeuges mehrere Durchführungen aufweist, wobei die Durchführungen des Befestigungselementes und die Durchführungen des Körpers vorzugsweise überlappend angeordnet sind.

Es hat sich bewährt, dass das Befestigungselement in dessen Mitte eine kreisförmige Öffnung mit einem Durchmesser zwischen 20 mm und 250 mm, bevorzugt 40 mm, oder eine quadratische Öffnung mit einer Kantenlänge zwischen 20 mm und 250 mm, bevorzugt 150 mm, aufweist. Dabei wird eine äußere Erscheinungsform des Extrudates durch die Formgebung der Öffnung festgelegt. Damit erfolgt eine Anpassung der Form des Extrudates hinsichtlich des späteren Einsatzgebietes, wobei zylindrische Extrudate für gewöhnlich in Rohren, wie beispielsweise Abgasrohren in der Automobilindustrie, eingebaut und kubische oder quaderförmige Extrudate hauptsächlich in eckigen Schächten, wie beispielsweise in der Abgasreinigung von industriellen Anlagen, angewandt werden. Zudem kann durch die Öffnung des Befestigungselementes auch die Wandstärke der Außenwände des Extrudates festgelegt werden, wobei die Innenwände des Befestigungselementes für gewöhnlich flach ausgebildet sind.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 perspektivische Darstellung des Körpers eines Extrusionswerkzeuges nach einem Verfahrensschritt;
Fig. 2 perspektivische Darstellung des Körpers eines Extrusionswerkzeuges gemäß Fig. 1 nach einem weiteren Verfahrensschritt;
Fig. 3 perspektivische Darstellung eines erfindungsgemäßen Extrusionswerkzeuges;
Fig. 4 Draufsicht eines erfindungsgemäßen Extrusionswerkzeuges mit einem eingesetzten Element;
Fig. 5 schematische Darstellung der Zellgeometrie eines Extrudates mit rundem Querschnitt;
Fig. 6 perspektivische Darstellung eines Teils der Zellgeometrie eines Extrudates mit eckigem Querschnitt;
Fig. 7 schematische Darstellung der Einheitszelle eines mit dem Extrusionswerkzeug nach Fig. 3 hergestellten Extrudates.

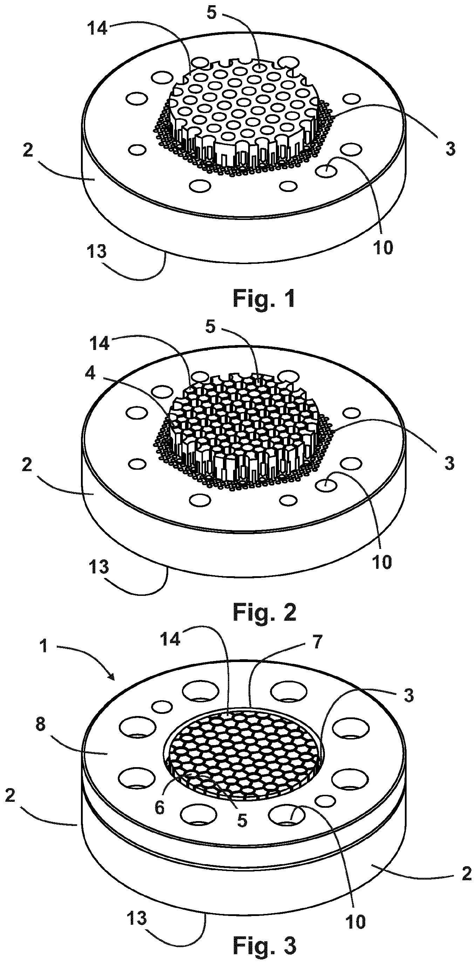

In Fig. 1 wird eine perspektivische Ansicht des Körpers 2 eines Extrusionswerkzeuges 1 mit einer hier nicht sichtbaren ersten Seite 13, die Einlassöffnungen 3 aufweist, und einer zweiten Seite 14, über welche durch die erste Seite 13 in das Extrusionswerkzeug 1 gepresstes Material als Extrudat aus dem Extrusionswerkzeug 1 austreten kann, gezeigt, wobei eine Fläche zur Auflage eines Befestigungselementes 8, ein Teil der inneren Struktur und eine zweite Seite 14 des Extrusionswerkzeuges 1 erkennbar sind. Dabei weist die Fläche zur Auflage des Befestigungselementes 8 mehrere Durchführungen 10, insbesondere in Form von Bohrungen, zur Aufnahme von Befestigungsmitteln und Positionierungsmitteln auf, sodass der Körper 2 an einer Extrusionsapparatur ausgerichtet und befestigt werden kann. Aufgrund des fehlenden Befestigungselementes 8 kann ein Bereich zum Durchführen eines Formgebungsprozesses von der zweiten Seite 14 des Extrusionswerkzeuges 1 bis zu einem Übergang der Geometrien von der ersten Seite 13 und der zweiten Seite 14 des Extrusionswerkzeuges 1 eingesehen werden. Dementsprechend werden sowohl Einlassöffnungen 3 als auch Vertiefungen 5 sichtbar, wobei in einem Randbereich auch bevorzugte Tiefen der Vertiefungen 5 bzw. Einlassöffnungen 3 erkennbar sind. Zudem ist ersichtlich, dass die sich von der ersten Seite 13 in das Extrusionswerkzeug 1 erstreckenden Einlassöffnungen 3 ungefähr bis zur halben Tiefe der Vertiefungen 5 vordringen, wodurch sich bei einem Formgebungsprozess eine bessere Verteilung des plastischen Materials erreichen lässt. Darüber hinaus sind sowohl die Ausführungen der Einlassöffnungen 3 sowie der Vertiefungen 5 als Sacklochbohrungen sowie das direkte Münden einer Einlassöffnung 3 in jeweils eine Vertiefung 5 in der Darstellung eindeutig erkennbar. Hinsichtlich einer Verwendung des dargestellten Körpers 2 in einem Formgebungsprozess, dient dieser im gegenwärtigen Bearbeitungsschritt lediglich einer Umformung von plastischem Material in Stangenform.

Inwiefern der Körper 2 gemäß Fig. 1 zu bearbeiten ist, um eine Verbindung der Stangen zu schaffen und ein einteiliges Extrudat mit mehreren Zellen erzeugen zu können, erschließt sich aus der Fig. 2. Dieser Abbildung ist eine perspektivische Darstellung des Extrusionswerkzeuges 1 nach weiteren Bearbeitungsschritten zu entnehmen. Hierbei ist ersichtlich, dass die einzelnen Vertiefungen 5 durch Schlitze 4 miteinander verbunden werden, wodurch jede Vertiefung 5 mit sechs benachbarten Vertiefungen 5 über die Schlitze 4 in direkter Verbindung steht. Um bei gleichmäßiger Ausrichtung der Vertiefungen 5 eine Vertiefung 5 mit allen sechs angrenzenden Vertiefungen 5 verbinden zu können, hat sich wie dargestellt das Einbringen von Schlitzen 4 bewährt, welche in einem 60° Winkel α, β zueinander positioniert sind. Zudem ist anhand der Darstellung ersichtlich, dass Einlassöffnungen 3 nicht ausschließlich in Vertiefungen 5 und deren angrenzende Bereiche münden, sondern auch Einlassöffnungen 3 vorgesehen sind, welche ausschließlich in Schlitzen 4 münden. Dadurch werden sowohl Vertiefungen 5 als auch Schlitze 4 gleichmäßig mit plastischem Material befüllt, wodurch ein gleichmäßiger Umformungsprozess des plastischen Materials stattfinden und ein homogenes Extrudat erstellt werden kann.

In der Fig. 3 wird eine perspektivische Darstellung eines vollständig zusammengesetzten Extrusionswerkzeuges 1 gezeigt, wobei nunmehr ein Befestigungselement 8 aufgesetzt und Elemente in die Vertiefungen 5 der zweiten Seite 14 eingesetzt wurden. Dabei ist das Befestigungselement 8 mit einer runden Öffnung 7 zur äußerlichen Begrenzung des Extrudates ausgebildet, weshalb mit dem dargestellten Extrusionswerkzeug 1 eine Umformung von plastischem Material zu einem Extrudat mit rundem Querschnitt und einer Vielzahl von geometrisch unterschiedlich geformten und orientierten Zellen durchgeführt werden kann. Folglich tragen zur Ausgestaltung der Zellen nicht nur die in Fig. 1 und 2 dargestellten Vertiefungen 5 bzw. Schlitze 4 und deren Proportionen sowie Verbindungen untereinander, sondern auch die als Stifte 6 ausgebildeten Elemente bei, welche in die Vertiefungen 5 eingesetzt sind. Diese Stifte 6 sind mittig in den Vertiefungen 5 angeordnet und daher direkt auf der Einlassöffnung 3 positioniert, deren Mittelachse auf einer Mittelachse der Vertiefung 5 angeordnet ist. Hier kann die Einlassöffnung 3 auch eine Befestigung des Stiftes 6 erlauben und somit von diesem verschlossen und/oder verdeckt werden. Durch die vorliegende Dimensionierung der Stifte 6, welche zylindrisch und mit rundem Querschnitt ausgebildet sind, ergibt sich eine Verdrängung des plastischen Materials aus den Vertiefungen 5. Folglich tragen die Vertiefungen 5 nicht mehr wie in Fig. 1 und 2 zur Erstellung eines stabförmigen Anteiles des Extrudates bei, sondern bilden nunmehr einen rohrförmigen Anteil des Extrudates aus. Zudem sind die Stifte 6 so dimensioniert, dass eine Wandstärke der resultierenden rohrförmigen Anteile des Extrudates einer Schlitzbreite des Extrusionswerkzeuges 1 entsprechen. Dementsprechend wird mit der dargestellten Geometrie der zweiten Seite 14 des Extrusionswerkzeuges 1, im Unterschied zum Körper 2 des Extrusionswerkzeuges 1 gemäß Fig. 2, ein Extrudat erzielt, dass eine signifikant höhere Anzahl an Zellen aufweist.

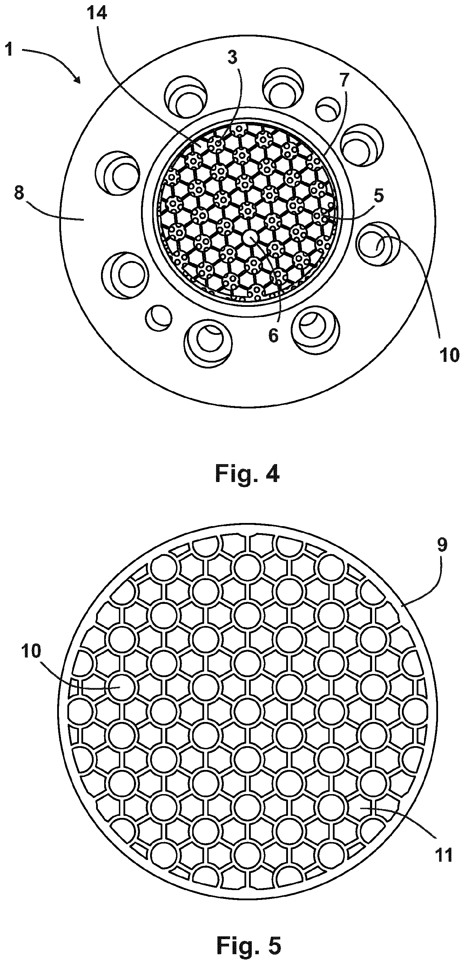

In Fig. 4 ist eine Draufsicht eines Extrusionswerkzeuges 1 gemäß Fig. 3 gezeigt, wobei ein Stift 6 in eine Vertiefung 5 des Extrusionswerkzeuges 1 eingesetzt ist. Dadurch wird ersichtlich, auf welche Weise das Einsetzen von Stiften 6 in die Vertiefungen 5 der zweiten Seite 14 des Extrusionswerkzeuges 1 den Querschnitt und damit das gebildete Extrudat verändert. Zudem können die direkten in die Vertiefungen 5 mündenden Einlassöffnungen 3 sowie der durch die Öffnung 7 des Befestigungselementes 8 erstellte Randbereich des Extrudates erkannt werden. Bei genauerer Betrachtung der Durchführungen 10 des Befestigungselementes 8 kann auch festgestellt werden, dass diese teilweise einen größeren Durchmesser aufweisen als jene des Körpers 2.

Fig. 5 zeigt eine schematische Darstellung der Zellgeometrie eines Extrudates mit rundem Querschnitt, welches mit einem Extrusionswerkzeug 1 gemäß Fig. 3 hergestellt werden kann. Diese Darstellung veranschaulicht sowohl einen vom Befestigungselement 8 erzeugten dicken Rand 9 des Extrudates als auch dessen innere Struktur. Dabei weist die Geometrie in den unterschiedlichen Bereichen, mit Ausnahme des Randes 9, im Wesentlichen idente Wandstärken auf. Dementsprechend wird die Wandstärke der runden Zellen 11 durch ein Verhältnis der Durchmesser von Stift 6 und Vertiefung 5 sowie die Wandstärke der vieleckigen Zellen 12 durch die Breite der Schlitze 4 in der zweiten Seite 14 des Extrusionswerkzeuges 1 definiert.

Darüber hinaus ist die Abweichung von einer sechseckigen Zellgeometrie durch die eingebrachten runden Zellen 11 eindeutig ersichtlich, wenngleich auch eine hexagonale Einheitszelle vorliegt. Bei genauer Betrachtung kann hier auch erkannt werden, dass die Vertiefungen 5 mit einem Abstand von weniger als dem eigenen Durchmesser, ungefähr der Hälfte des Durchmessers, voneinander entfernt positioniert sind. Dadurch ergibt sich eine besonders gleichmäßige geometrische Verteilung der Zellen innerhalb des Extrudates, sodass eine Strömungsgeschwindigkeit von Zellen durchtretenden Gasen über den gesamten Querschnitt des Extrudates annähernd gleichmäßig verteilt werden kann.

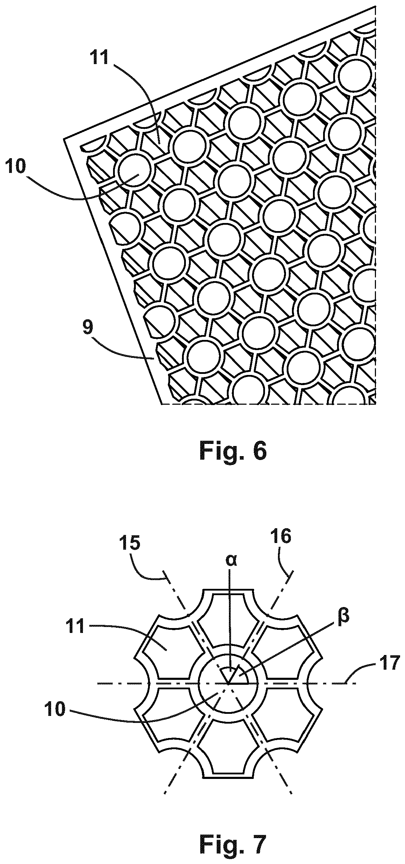

In Fig. 6 zeigt eine perspektivische Darstellung eines Teils der Zellgeometrie eines Extrudates mit eckigem Querschnitt. Zum Herstellen des abgebildeten Extrudates kann das Extrusionswerkzeug 1 dahingehend angepasst werden, dass Einlassöffnungen 3, Vertiefungen 5 und Schlitze 4 über eine eckige Grundfläche erstreckt werden müssen. Soll die runde Grundform eines Extrusionswerkzeuges 1 beibehalten werden, ist ein Extrusionswerkzeug 1 gemäß Fig. 3 zudem dahingehend zu ändern, dass die Öffnung 7 des Befestigungselementes 8 mit eckigem Querschnitt ausgebildet wird. Hierdurch kann eine durch Vertiefungen 5, Schlitze 4 und Stifte 6 erzeugte Geometrie des Extrudates auf eine eckige Grundfläche erstreckt werden.

In Fig. 7 ist eine schematische Darstellung der Einheitszelle eines mit dem Extrusionswerkzeug 1 hergestellten Extrudates gezeigt. Diese gibt die Proportionen zwischen Vertiefungen 5, Schlitzen 4 und Stiften 6 in Form einer schematischen Einheitszelle wieder. Dabei kann der Abstand der Vertiefungen 5 sowie der Winkel α, β der Schlitze 4 zueinander eindeutig erkannt werden. Letzteres wird durch eine Kennzeichnung eines ersten Winkels α zwischen den Schlitzen 4 der ersten Richtung 15 und zweiten Richtung 16 sowie eines zweiten Winkels β zwischen den Schlitzen 4 der zweiten Richtung 16 und dritten Richtung 17 angegeben, wobei beide Winkel α, β eine Größe von 60° aufweisen. Darüber hinaus ist hier eindeutig ersichtlich, dass die Differenz der Durchmesser von Vertiefung 5 und Stift 6 im Wesentlichen der Breite der Schlitze 4 entspricht.

Mit einem erfindungsgemäßen Verfahren wird auf einfache und effiziente Weise die Herstellung eines Extrusionswerkzeuges 1 ermöglicht, welches aus wenigen Einzelteilen zusammengesetzt ist und eine spezielle Geometrie aufweist, sodass eine Umformung von plastischem Material in einen Träger mit großer Oberfläche und gleichmäßiger Verteilung eines Strömungswiderstandes erzielt werden kann.

## Patentansprüche

1. Verfahren zur Herstellung eines Extrusionswerkzeuges (1), welches zur Bildung eines Extrudates geeignet ist, indem plastisches Material an einer ersten Seite (13) in das Extrusionswerkzeug (1) gepresst wird, wonach das plastische Material nach einer Umformung an einer zweiten Seite (14) aus dem Extrusionswerkzeug (1) austritt, wobei in die erste Seite (13) eines Körpers (2) Einlassöffnungen (3) eingebracht werden, wobei in die zweite Seite (14) des Körpers (2) Schlitze (4) eingebracht werden, welche die Einlassöffnungen (3) verbinden, **dadurch gekennzeichnet, dass** in die zweite Seite (14) zumindest eine Vertiefung (5) eingebracht wird, welche mit den Schlitzen (4) und den Einlassöffnungen (3) verbunden ist, wonach in der Vertiefung (5) ein Element angeordnet wird, sodass ein Querschnitt des mit dem Extrusionswerkzeug (1) gebildeten Extrudates durch eine Geometrie der Schlitze (4), eine Geometrie der Vertiefungen (5) und eine Geometrie des Elementes zumindest teilweise definiert wird.

2. Verfahren nach Anspruch 1, **dadurch gekennzeichnet, dass** die Einlassöffnungen (3) und die Vertiefungen (5) durch Bohren, Fräsen und/oder Laserbohren erstellt werden.

3. Verfahren nach Anspruch 1 oder 2, **dadurch gekennzeichnet, dass** die Schlitze (4) durch Sägen oder Schneiden, bevorzugt Laserschneiden oder Funkenerodieren, besonders bevorzugt Drahterodieren, erstellt werden.

4. Verfahren nach einem der Ansprüche 1 bis 3, **dadurch gekennzeichnet, dass** das Element manuell und/oder maschinell in die Vertiefung (5) eingesteckt, eingepresst und/oder eingeschraubt wird.

5. Verfahren nach einem der Ansprüche 1 bis 4, **dadurch gekennzeichnet, dass** das Element stoffschlüssig, insbesondere durch kleben oder schweißen, in der Vertiefung (5) befestigt wird.

6. Verfahren nach einem der Ansprüche 1 bis 5, **dadurch gekennzeichnet, dass** in einem ersten Verfahrensschritt Einlassöffnungen (3) sowie Vertiefungen (5) und in einem zweiten Verfahrensschritt die Schlitze (4) erstellt werden, wobei in einem dritten Verfahrensschritt die Elemente eingesetzt werden.

7. Extrusionswerkzeug (1) zum Formen von plastischem Material, insbesondere hergestellt nach einem Verfahren der Ansprüche 1 bis 6, umfassend einen Körper (2) mit einer ersten Seite (13) und einer zweiten Seite (14), wobei die erste Seite (13) Einlassöffnungen (3) und die zweite Seite (14) Schlitze (4) aufweist, welche mehrere Einlassöffnungen (3) miteinander verbinden, sodass mit dem Extrusionswerkzeug (1) Extrudat bildbar ist, indem plastisches Material über die Einlassöffnungen (3) der ersten Seite (13) in das Extrusionswerkzeug (1) eingepresst wird, welches plastische Material nach einer Umformung zumindest teilweise über die Schlitze (4) der zweiten Seite (14) aus dem Extrusionswerkzeug (1) austreten kann, **dadurch gekennzeichnet, dass** in der zweiten Seite (14) zumindest eine Vertiefung (5) vorgesehen ist, welche mit den Schlitzen (4) und den Einlassöffnungen (3) verbunden ist und in welcher ein Element angeordnet ist, sodass ein Querschnitt des Extrudates durch eine Geometrie der Schlitze (4), eine Geometrie der Vertiefungen (5) und eine Geometrie des Elementes zumindest teilweise definiert ist.

8. Extrusionswerkzeug (1) nach Anspruch 7, **dadurch gekennzeichnet, dass** die Vertiefungen (5) einen größeren Durchmesser als die Einlassöffnungen (3) aufweisen.

9. Extrusionswerkzeug (1) nach Anspruch 7 oder 8, **dadurch gekennzeichnet, dass** zumindest einige Einlassöffnungen (3) direkt in der Vertiefung (5) münden.

10. Extrusionswerkzeug (1) nach einem der Ansprüche 7 bis 9, **dadurch gekennzeichnet, dass** Mittelachsen der Schlitze (4) derart angeordnet sind, dass diese Mittelachsen der Vertiefungen (5) und Mittelachsen der Einlassöffnungen (3) schneiden.

11. Extrusionswerkzeug (1) nach einem der Ansprüche 7 bis 10, **dadurch gekennzeichnet, dass** das Element kleiner als ein Querschnitt der Vertiefung (5) ausgebildet ist, sodass zwischen Element und Vertiefung (5) ein Abstand verbleibt, welcher Abstand bevorzugt einem 0,5-fachen bis 2-fachen einer Breite der Schlitze (4) entspricht.

12. Extrusionswerkzeug (1) nach einem der Ansprüche 7 bis 11, **dadurch gekennzeichnet, dass** der Abstand zweier Vertiefungen (5) zwischen 25 % und 100 %, bevorzugt 42 %, des Durchmessers der Vertiefung (5) beträgt.

13. Extrusionswerkzeug (1) nach einem der Ansprüche 7 bis 12, **dadurch gekennzeichnet, dass** Schlitze (4) vorgesehen sind, welche entlang einer ersten Richtung (15) und entlang einer zweiten Richtung (16) an der zweiten Seite (14) angeordnet sind, wobei die erste Richtung (15) mit der zweiten Richtung (16) einen ersten Winkel (α) von 40° bis 120°, insbesondere etwa 60°, einschließt.

14. Extrusionswerkzeug (1) nach einem der Ansprüche 7 bis 13, **dadurch gekennzeichnet, dass** Schlitze (4) vorgesehen sind, welche entlang einer dritten Richtung (17) an der zweiten Seite (14) angeordnet sind, wobei die dritte Richtung (17) mit der zweiten Richtung (16) einen zweiten Winkel (β) von 40° bis 120°, insbesondere etwa 60°, einschließt.

15. Extrusionswerkzeug (1) nach einem der Ansprüche 7 bis 14, **dadurch gekennzeichnet, dass** die Elemente mit kreisförmigem Querschnitt ausgebildet sind.

## Claims

1. A method for producing an extrusion tool (1) that is suitable for forming an extrudate by plastic material being pressed into the extrusion tool (1) on a first side (13), after which the plastic material emerges from the extrusion tool (1) on a second side (14) after reshaping, wherein inlet openings (3) are made in the first side (13) of a body (2), wherein slots (4) that connect the inlet openings (3) are made in the second side (14) of the body (2), **characterised in that** at least one depression (5) is made in the second side (14) and is connected to the slots (4) and the inlet openings (3), after which an element is arranged in the depression (5) so that a cross section of the extrudate formed with the extrusion tool (1) is at least partially defined by a geometry of the slots (4), a geometry of the depressions (5) and a geometry of the element.

2. The method according to Claim 1, **characterised in that** the inlet openings (3) and the depressions (5) are created by drilling, milling and/or laser drilling.

3. The method according to Claim 1 or 2, **characterised in that** the slots (4) are created by sawing or cutting, preferably laser cutting or spark erosion, particularly preferably electric discharge wire cutting.

4. The method according to one of Claims 1 to 3, **characterised in that** the element is inserted, pressed and/or screwed into the depression (5) manually and/or by machine.

5. The method according to one of Claims 1 to 4, **characterised in that** the element is fastened in the depression (5) in an integrally bonded manner, in particular by adhesive bonding or welding.

6. The method according to one of Claims 1 to 5, **characterised in that** inlet openings (3) and depressions (5) are created in a first method step, and the slots (4) are created in a second method step, wherein the elements are inserted in a third method step.

7. An extrusion tool (1) for shaping plastic material, in particular produced by a method according to Claims 1 to 6, comprising a body (2) with a first side (13) and a second side (14), wherein the first side (13) has inlet openings (3), and the second side (14) has slots (4), which connect multiple inlet openings (3) to one another so that extrudate can be formed using the extrusion tool (1) by plastic material being pressed into the extrusion tool (1) via the inlet openings (3) of the first side (13), which plastic material can emerge from the extrusion tool (1) at least partially via the slots (4) of the second side (14) after reshaping, **characterised in that** at least one depression (5) is provided in the second side (14) and is connected to the slots (4) and the inlet openings (3) and in which an element is arranged so that a cross section of the extrudate is at least partially defined by a geometry of the slots (4), a geometry of the depressions (5) and a geometry of the element.

8. The extrusion tool (1) according to Claim 7, **characterised in that** the depressions (5) have a larger diameter than the inlet openings (3).

9. The extrusion tool (1) according to Claim 7 or 8, **characterised in that** at least some inlet openings (3) open directly into the depression (5).

10. The extrusion tool (1) according to one of Claims 7 to 9, **characterised in that** central axes of the slots (4) are arranged such that they intersect central axes of the depressions (5) and central axes of the inlet openings (3).

11. The extrusion tool (1) according to one of Claims 7 to 10, **characterised in that** the element is smaller than a cross section of the depression (5) so that a spacing remains between the element and the depression (5), which spacing preferably corresponds to 0.5 to 2 times a width of the slots (4).

12. The extrusion tool (1) according to one of Claims 7 to 11, **characterised in that** the spacing of two depressions (5) is between 25% and 100%, preferably 42%, of the diameter of the depression (5).

13. The extrusion tool (1) according to one of Claims 7 to 12, **characterised in that** slots (4) are provided that are arranged on the second side (14) along a first direction (15) and along a second direction (16), wherein the first direction (15) forms a first angle (α) of 40° to 120°, in particular approximately 60°, with the second direction (16).

14. The extrusion tool (1) according to one of Claims 7 to 13, **characterised in that** slots (4) are provided that are arranged on the second side (14) along a third direction (17), wherein the third direction (17) forms a second angle (β) of 40° to 120°, in particular approximately 60°, with the second direction (16).

15. The extrusion tool (1) according to one of Claims 7 to 14, **characterised in that** the elements are formed with a circular cross section.

## Revendications

1. Procédé, destiné à fabriquer un outil d'extrusion (1), lequel est apte à former un produit extrudé, en ce qu'une matière plastique est injectée sur un premier côté (13) dans l'outil d'extrusion (1), suite à quoi, après une déformation, la matière plastique sort d'un deuxième côté (14) hors de l'outil d'extrusion (1), dans le premier côté (13) d'un corps (2) étant ménagés des orifices d'entrée (3), dans le deuxième côté (14) du corps (2) étant ménagées des fentes (4), lesquelles relient les orifices d'entrée (3), **caractérisé en ce que** l'on ménage dans un deuxième côté (14) au moins un creux (5), lequel est relié avec les fentes (4) et les orifices d'entrée (3), suite à quoi, l'on place dans le creux (5) un élément, de telle sorte qu'une section transversale du produit extrudé formé avec l'outil d'extrusion (1) soit définie au moins partiellement par une géométrie des fentes (4), une géométrie des creux (5) et une géométrie de l'élément.

2. Procédé selon la revendication 1, **caractérisé en ce que** les orifices d'entrée (3) et les creux (5) sont créés par fraisage et / ou par perçage au laser.

3. Procédé selon la revendication 1 ou 2, **caractérisé en ce que** les fentes (4) sont créées par sciage ou par découpe, de préférence par découpe au laser ou par électroérosion, de manière particulièrement préférentielle, par électroérosion par fil.

4. Procédé selon l'une quelconque des revendications 1 à 3, **caractérisé en ce que** l'on insère, l'on injecte et / ou l'on visse l'élément manuellement et / ou mécaniquement dans le creux (5).

5. Procédé selon l'une quelconque des revendications 1 à 4, **caractérisé en ce que** l'on fixe l'élément par conjugaison de matières, notamment par collage ou par soudage dans le creux (5).

6. Procédé selon l'une quelconque des revendications 1 à 5, **caractérisé en ce que** dans une première étape de procédé, l'on créé des orifices d'entrée (3), ainsi que des creux (5) et dans une deuxième étape de procédé, l'on créé les fentes (4), dans une troisième étape de procédé étant insérés les éléments.

7. Outil d'extrusion (1), destiné à façonner une matière plastique, fabriqué notamment d'après un procédé selon les revendications 1 à 6, comprenant un corps (2) pourvu d'un premier côté (13) et d'une deuxième côté (14), le premier côté (13) comportant des orifices d'entrée (3) et le deuxième côté (14) comportant des fentes (4), lesquelles relient entre eux plusieurs orifices d'entrée (3), de telle sorte que le produit extrudé puisse être formé à l'aide de l'outil d'extrusion (1), en ce que l'on injecte une matière plastique par l'intermédiaire des orifices d'entrée (3) du premier côté (13) dans l'outil d'extrusion (1), laquelle matière plastique peut sortir après une déformation au moins partiellement par l'intermédiaire des fentes (4) du deuxième côté (14) hors de l'outil d'extrusion (1), **caractérisé en ce que** dans le deuxième côté (14) est prévu au moins un creux (5), lequel est relié avec les fentes (4) et les orifices d'entrée (3) et dans lequel est placé un élément, de telle sorte qu'une section transversale du produit extrudé soit définie au moins partiellement par une géométrie des fentes (4), une géométrie des creux (5) et une géométrie de l'élément.

8. Outil d'extrusion (1) selon la revendication 7, **caractérisé en ce que** les creux (5) ont un diamètre supérieur à celui des orifices d'entrée (3).

9. Outil d'extrusion (1) selon la revendication 7 ou 8, **caractérisé en ce qu'**au moins certains orifices d'entrée (3) débouchent directement dans le creux (5).

10. Outil d'extrusion (1) selon l'une quelconque des revendications 7 à 9, **caractérisé en ce que** des axes médians des fentes (4) sont placés de telle sorte qu'ils recoupent des axes médians des creux (5) et des axes médians des orifices d'entrée (3).

11. Outil d'extrusion (1) selon l'une quelconque des revendications 7 à 10, **caractérisé en ce que** l'élément est conçu en étant inférieur à une section transversale du creux (5), de telle sorte qu'entre l'élément et le creux (5) il reste un écart, lequel écart correspond de préférence à de 0,5 fois à 2 fois une largeur des fentes (4) .

12. Outil d'extrusion (1) selon l'une quelconque des revendications 7 à 11, **caractérisé en ce que** l'écart entre deux creux (5) s'élève à de 25 % à 100 %, de préférence à 42 % du diamètre du creux (5).

13. Outil d'extrusion (1) selon l'une quelconque des revendications 7 à 12, **caractérisé en ce que** des fentes (4) sont prévues, lesquelles sont placées le long d'une première direction (15) et le long d'une deuxième direction (16) sur le deuxième côté (14), la première direction (15) incluant avec la deuxième direction (16) un premier angle (α) de 40° à 120°, notamment d'environ 60°.

14. Outil d'extrusion (1) selon l'une quelconque des revendications 7 à 13, **caractérisé en ce que** des fentes (4) sont prévues, lesquelles sont placées le long d'une troisième direction (17) sur le deuxième côté (14), la troisième direction (17) incluant avec la deuxième direction (16) un deuxième angle (β) de 40° à 120°, notamment d'environ 60°.

15. Outil d'extrusion (1) selon l'une quelconque des revendications 7 à 14, **caractérisé en ce que** les éléments sont conçus avec une section transversale circulaire.
